# EUROPEAN PATENT APPLICATION

(11) **EP 4 835 302 A1**
(43) Date of publication of application: **04.11.2026**
(21) Application number: 24923842.9
(22) Date of filing: 27.08.2024
(51) Int. Cl.: F04D 29/046, F04D 29/047, F04D 29/048, F04D 29/058, F04D 29/059, F16C 19/04, F16C 19/24, F16C 32/00, F16C 32/04, F16C 32/06

(54) **PUMP**

(30) Priority: 06.02.2024 JP 2024016127
(71) Applicant: Mitsubishi Heavy Industries, Ltd., Chiyoda-ku Tokyo 100-8332 (JP)
(72) Inventor: KOBAYASHI, Kazuta, Tokyo 100-8332 (JP); FUNAKOSHI, Hiroshi, Tokyo 100-8332 (JP); SHIGIHARA, Takuzo, Tokyo 100-8332 (JP)
(74) Representative: Cabinet Beau de Loménie
(86) International application number: PCT/JP2024/030445
(87) International publication number: WO 2025/169523

(57) **Abstract**

A pump includes: a casing having a hollow shape; a rotary shaft disposed along a vertical direction inside the casing; an impeller provided on the rotary shaft; a plurality of radial bearings that rotatably support the rotary shaft with respect to the casing and that receive a load in a direction perpendicular to the rotary shaft; and a non-contact axial bearing that rotatably supports the rotary shaft with respect to the casing and that receives an axial load of the rotary shaft.

## Description

### Field

The present disclosure relates to a pump.

### Background

A vertical rotation pump is used as a pump that pressurizes fluid. In the vertical rotation pump, a rotary shaft is disposed along the vertical direction inside a casing. The rotary shaft is rotatably supported on the casing by a bearing. An impeller is fixed to a lower end portion of the rotary shaft. In this case, bearings are generally provided in an upper portion and a lower portion of the casing, and rotatably support the rotary shaft at two locations. Examples of such a pump include those described in Patent Literatures 1 and 2.

The pumps described in Patent Literatures 1 and 2 support a rotary shaft with rolling bearings (radial bearings) at different positions in the axial direction, and are provided with an axial thrust balancing device. A plurality of ball bearings receives a radial load that acts on the rotary shaft. The axial thrust balancing device removes or reduces a thrust load that acts on the rotary shaft.

### Citation List

### Patent Literature

Patent Literature 1: Japanese Laid-open Patent Publication No. H08-296586
Patent Literature 2: Japanese Laid-open Patent Publication No. 2000-297786 Summary

### Technical Problem

A conventional pump supports a rotary shaft with a plurality of rolling bearings (radial bearings) to receive a radial load that acts on the rotary shaft with the plurality of rolling bearings. Then, it is considered that the conventional pump receives the thrust load that acts on the rotary shaft with one ball bearing. In this case, however, the rolling bearings receive the radial load and the thrust load. An excessive load acts on the rolling bearing, and wear of the rolling bearing is promoted, which shortens the service life. If an axial thrust balancing device is provided as in the pumps described in Patent Literatures 1 and 2, a structure is complicated.

The present disclosure has been made to solve the above-described problems, and an object thereof is to provide a pump that extends the service life by reducing wear of a bearing.

### Solution to Problem

To achieve the above object, a pump according to the present disclosure includes: a casing having a hollow shape; a rotary shaft disposed along a vertical direction inside the casing; an impeller provided on the rotary shaft; a plurality of radial bearings that rotatably support the rotary shaft with respect to the casing and that receive a load in a direction perpendicular to the rotary shaft; and a non-contact axial bearing that rotatably supports the rotary shaft with respect to the casing and that receives an axial load of the rotary shaft.

### Advantageous Effects of Invention

According to a pump of the present disclosure, the service life can be extended by reducing wear of a bearing.

### Brief Description of Drawings

FIG. 1 is a schematic view illustrating a pump of an embodiment.
FIG. 2 is a longitudinal cross-sectional view illustrating a non-contact axial bearing.
FIG. 3 is a cross-sectional view taken along line III-III in FIG. 2 illustrating the non-contact axial bearing.
FIG. 4 is a cross-sectional view of a main part of the non-contact axial bearing.

### Description of Embodiments

A preferred embodiment of the present disclosure will be described in detail below with reference to the drawings. Note that the present disclosure is not limited by the embodiment, and, in a case where there is a plurality of embodiments, the present disclosure also includes a combination of the embodiments. Furthermore, components in the embodiment include those that can be easily assumed by those skilled in the art, those that are substantially the same, and those in a so-called equivalent range.

### <Configuration of Pump>

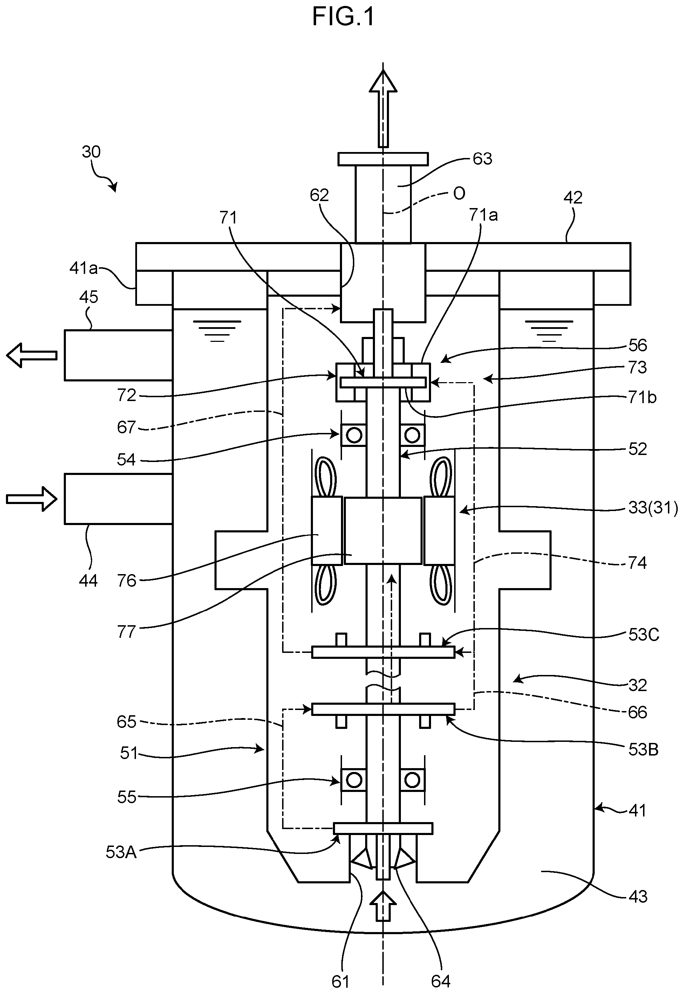

FIG. 1 is a schematic view illustrating a pump of the embodiment.

As illustrated in FIG. 1, a pump 30 includes a drive unit 31 and a pump body 32. The drive unit 31 includes a drive motor 33. The pump body 32 is a device for pressurizing liquid (e.g., liquid hydrogen) serving as fluid. Note that the fluid is not limited to liquid hydrogen, and may be other liquids or gases.

A tank 41 is a container for reserving liquid, and is also a vacuum heat insulation container. The tank 41 is provided with an outer peripheral flange 41a in an upper portion, and is installed on a frame (not illustrated). An upper flange 42 is disposed in the upper portion of the tank 41 with the pump body 32 being lifted, and is installed in an airtight manner. The tank 41 is a heat insulating structure having a bottomed cylindrical shape. A liquid reservoir 43 is formed inside the tank 41.

A supply pipe 44 and a gas discharge pipe 45 are coupled to a side portion of the tank 41. The supply pipe 44 is a pipe for supplying liquid from an external supply source to the liquid reservoir 43 of the tank 41. The supply pipe 44 is provided on the bottom side of the tank 41. The gas discharge pipe 45 is used to discharge a component vaporized in the liquid reservoir 43 to the outside. The gas discharge pipe 45 is provided on the upper side of the supply pipe 44.

The pump body 32 is disposed inside the tank 41. The pump body 32 includes a casing 51, a rotary shaft 52, a plurality of impellers 53A, 53B, and 53C, a plurality of radial bearings 54 and 55, and a non-contact axial bearing 56.

The casing 51 has a hollow shape. The casing 51 may be formed of one member, or may be formed by integrally assembling a plurality of members. The casing 51 is disposed inside the tank 41. The casing 51 is suspended and supported by an upper end portion of the casing 51 being coupled to the upper flange 42. Although having a cylindrical shape centered on a center axis O along the vertical direction, the casing 51 is not limited to having the cylindrical shape. Furthermore, although the center axis O corresponds to the centers of the tank 41 and the casing 51, the center of the tank 41 and the center of the casing 51 may be shifted.

In the casing 51, a suction portion 61 is provided at a lower end portion, and an ejection portion 62 is provided at the upper end portion. The suction portion 61 opens toward the liquid reserved in the liquid reservoir 43 of the tank 41. An ejection pipe 63 is coupled to the ejection portion 62. Note that a pipe extended from the supply pipe 44 or another supply pipe may be directly connected to the suction portion 61. That is, liquid may be introduced from the pipe directly to the suction portion 61 without once reserving the liquid in the liquid reservoir 43 of the tank 41.

The rotary shaft 52 is disposed along the vertical direction inside the casing 51. The rotary shaft 52 has a columnar shape centered on the center axis O. The casing 51 and the rotary shaft 52 are disposed concentrically centered on the center axis O. The impellers 53A, 53B, and 53C are provided on the rotary shaft 52. A plurality of (three in this embodiment) impellers 53A, 53B, and 53C is disposed at intervals in the axial direction of the rotary shaft 52. The impeller 53A is fixed to a lower end portion of the rotary shaft 52, and is integrally provided with an inducer 64. Note, however, that the inducer 64 is not necessarily required to be provided at the lower end portion of the rotary shaft 52. The impeller 53A and the inducer 64 are located in the suction portion 61 of the casing 51. The impellers 53B and 53C are fixed to the rotary shaft 52 above the impeller 53A in the vertical direction.

The impellers 53A, 53B, and 53C and the inducer 64 are integrally provided on the rotary shaft 52. The impellers 53A, 53B, and 53C and the inducer 64 can integrally rotate with the rotary shaft 52, and can integrally move in the axial direction. Note, however, that not three but two or less or four or more impellers 53A, 53B, and 53C may be provided.

Rotation of the rotary shaft 52 integrally rotates the impellers 53A, 53B, and 53C and the inducer 64. Then, the inducer 64 suctions the liquid in the liquid reservoir 43 to the suction portion 61, and the impeller 53A pressurizes the liquid in one stage. The liquid pressurized in one stage is supplied to the impeller 53B through a passage 65 provided in the casing 51. Here, the impeller 53B pressurizes the liquid in two stages. The liquid pressurized in two stages is supplied to the impeller 53C through a passage 66 provided in the casing 51. Here, the impeller 53C pressurizes the liquid in three stages.

Then, the liquid pressurized by the impeller 53C in three stages is supplied to the ejection portion 62 through a passage 67 provided in the casing 51, and ejected from the ejection pipe 63. Note that a plurality of passages 65, 66, and 67 is preferably provided at intervals in the peripheral direction outside the impellers 53A, 53B, and 53C.

The radial bearings 54 and 55 rotatably support the rotary shaft 52 with respect to the casing 51. A plurality of (two in this embodiment) radial bearings 54 and 55 is provided. The radial bearing 54 is disposed in an upper portion of the casing 51 in the vertical direction. The radial bearing 55 is disposed in a lower portion of the casing 51 in the vertical direction. Note that not two but three or more radial bearings 54 and 55 may be provided. The radial bearings 54 and 55 receive a load in a direction perpendicular to the rotary shaft 52 (radial direction of rotary shaft 52). Although rolling bearings (ball bearings) are preferably applied as the radial bearings 54 and 55, the radial bearings 54 and 55 are not limited to the rolling bearings (ball bearings). The radial bearings 54 and 55 may be non-contact bearings.

The non-contact axial bearing 56 rotatably supports the rotary shaft 52 with respect to the casing 51. The non-contact axial bearing 56 is disposed in an intermediate portion in the vertical direction of the casing 51. Specifically, the non-contact axial bearing 56 is disposed above the plurality of radial bearings 54 and 55 in the vertical direction. Note, however, that the non-contact axial bearing 56 is not limited to being located at the position above the plurality of radial bearings 54 and 55. The non-contact axial bearing 56 may be located between the plurality of radial bearings 54 and 55 or below the plurality of radial bearings 54 and 55.

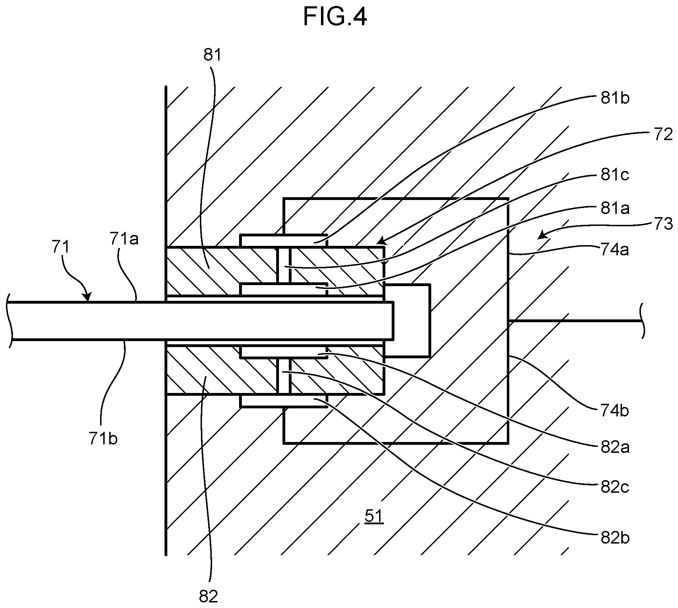

The non-contact axial bearing 56 receives an axial load of the rotary shaft 52. A static pressure bearing is applied as the non-contact axial bearing 56. Note, however, that not the static pressure bearing but a magnetic bearing may be applied as the non-contact axial bearing 56. The non-contact axial bearing 56 is a static pressure bearing, and thus includes a disk 71, a bearing body 72, and a fluid supply mechanism 73. The disk 71 is fixed to an outer peripheral portion of the rotary shaft 52. The disk 71 can integrally rotate with the rotary shaft 52, and can integrally move in the axial direction. The bearing body 72 is fixed to the casing 51. The bearing body 72 forms manifolds for causing axial pressure to act on an upper surface 71a and a lower surface 71b of the disk 71. Manifolds 81b and 82b (see FIG. 4) cause uniform pressure to act in the peripheral direction by supplying an appropriate amount of high-pressure liquid throughout the entire regions in the peripheral direction of the upper surface 71a and the lower surface 71b of the disk 71. The fluid supply mechanism 73 supplies fluid to the bearing body 72 to cause fluid pressure to act on the upper surface 71a and the lower surface 71b of the disk 71.

The fluid supply mechanism 73 supplies fluid pressurized by the impellers 53A, 53B, and 53C to the upper surface 71a and the lower surface 71b of the disk 71. The fluid supply mechanism 73 includes a supply passage 74 that causes the passage 67 and the bearing body 72 to communicate with each other. At the time of rotation of the rotary shaft 52, the impellers 53A, 53B, and 53C rotate to pressurize liquid, and supply the high-pressure liquid to the passage 67. The fluid supply mechanism 73 supplies a part of high-pressure liquid pressurized in three stages by the impeller 53C and flowing through the passage 67 from the supply passage 74 to the bearing body 72, and causes the high-pressure liquid to act on the upper surface 71a and the lower surface 71b of the disk 71.

Note that, at the start of the rotation of the rotary shaft 52, the impellers 53A, 53B, and 53C cannot pressurize the liquid without rotation, so that the fluid supply mechanism 73 causes fluid (high-pressure liquid) supplied from the outside to act on the upper surface 71a and the lower surface 71b of the disk 71.

Furthermore, the drive motor 33 constituting the drive unit 31 is disposed inside the casing 51. The drive motor 33 is disposed between the impeller 53C and the radial bearing 54. The drive motor 33 includes a stator 76 and a rotor 77. The stator 76 is fixed to an inner peripheral portion of the casing 51. The stator 76 has a cylindrical shape, and includes a stator iron core and a stator coil. The rotor 77 is fixed to the outer peripheral portion of the rotary shaft 52. The rotor 77 has a cylindrical shape, and includes a rotor iron core (e.g., permanent magnet and laminated steel sheet). In the drive motor 33, the stator 76 fixed to the casing 51 and the rotor 77 fixed to the rotary shaft 52 face each other with a gap in the radial direction.

### <Non-Contact Axial Bearing>

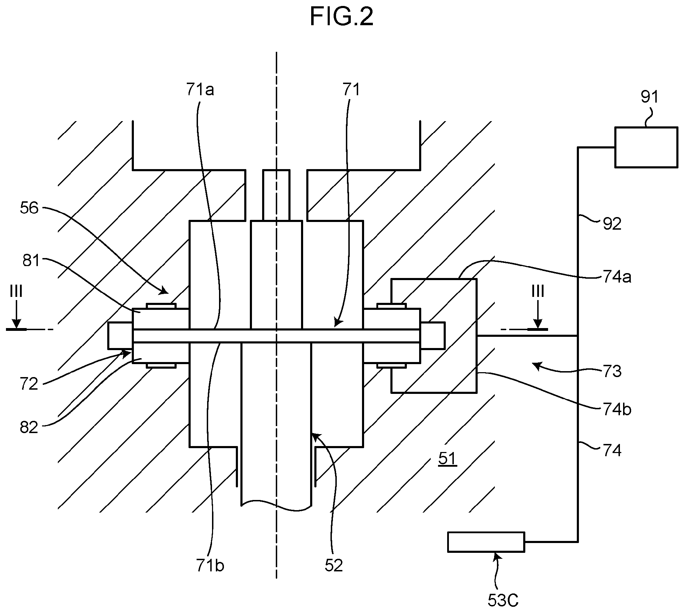

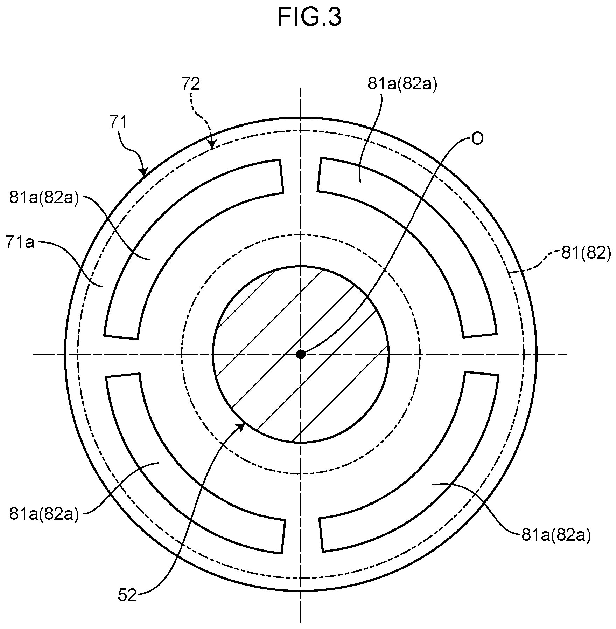

FIG. 2 is a longitudinal cross-sectional view illustrating the non-contact axial bearing. FIG. 3 is a cross-sectional view taken along line III-III in FIG. 2 illustrating the non-contact axial bearing. FIG. 4 is a cross-sectional view of a main part of the non-contact axial bearing.

As illustrated in FIGS. 2 to 4, the non-contact axial bearing 56 receives an axial load that acts on the rotary shaft 52. The non-contact axial bearing 56 is a static pressure bearing. The non-contact axial bearing 56 includes the disk 71. The disk 71 is fixed to the rotary shaft 52. The non-contact axial bearing 56 includes the bearing body 72. The bearing body 72 includes an upper bearing body 81 and a lower bearing body 82.

The upper bearing body 81 and the lower bearing body 82 have a ring shape. The upper bearing body 81 is fixed to the casing 51 so as to face an outer peripheral portion of the upper surface 71a of the disk 71 with a gap in the axial direction. The lower bearing body 82 is fixed to the casing 51 so as to face an outer peripheral portion of the lower surface 71b of the disk 71 with a gap in the axial direction. In the upper bearing body 81, upper pockets 81a are formed at positions facing the upper surface 71a of the disk 71. A plurality of (four in this embodiment) upper pockets 81a is provided at intervals in the peripheral direction. In the lower bearing body 82, lower pockets 82a are formed at positions facing the lower surface 71b of the disk 71. A plurality of (four in this embodiment) lower pockets 82a is provided at intervals in the peripheral direction.

Furthermore, in the upper bearing body 81, the upper manifold 81b is formed in an upper surface portion not facing the upper surface 71a of the disk 71. The upper manifold 81b has an annular shape along the peripheral direction. In the lower bearing body 82, the lower manifold 82b is formed in a lower surface portion not facing the lower surface 71b of the disk 71. The lower manifold 82b has an annular shape along the peripheral direction. The upper pockets 81a and the upper manifold 81b communicate with each other through communication passages 81c. The lower pockets 82a and the lower manifold 82b communicate with each other through communication passages 82c.

The supply passage 74 is divided into an upper supply passage 74a and a lower supply passage 74b. The upper supply passage 74a is connected to the upper manifold 81b. The lower supply passage 74b communicates with the lower manifold 82b. Furthermore, a high-pressure fluid supply device 91 is provided outside the pump body 32. A supply passage 92 extending from the high-pressure fluid supply device 91 is connected to the supply passage 74. The high-pressure fluid supply device 91 is, for example, a compressor, a pressure accumulating pump, or the like. Note that the number of divisions of the upper pockets 81a and the lower pockets 82a is not limited to four. The number of divisions of three or less or five or more may be adopted.

At the time of activation of the pump body 32, that is, before the rotary shaft 52 reaches a predetermined rotation speed, the impellers 53A, 53B, and 53C cannot pressurize liquid to a predetermined pressure. In the case, the fluid supply mechanism 73 supplies high-pressure liquid from the supply passage 92 and the supply passage 74 to the bearing body 72 with the high-pressure fluid supply device 91. That is, the high-pressure liquid is supplied from the upper supply passage 74a to the upper bearing body 81, and is supplied from the lower supply passage 74b to the lower bearing body 82. Then, the high-pressure liquid supplied to the upper bearing body 81 is supplied from the upper manifold 81b to the upper pockets 81a through the communication passages 81c, and acts on the upper surface 71a of the disk 71. Furthermore, the high-pressure liquid supplied to the lower bearing body 82 is supplied from the lower manifold 82b to the lower pockets 82a through the communication passages 82c, and acts on the lower surface 71b of the disk 71.

Here, since the liquid that acts on the upper surface 71a and the liquid that acts on the lower surface 71b have substantially the same pressure, the disk 71 is held at a neutral position between the upper bearing body 81 and the lower bearing body 82, where the disk 71 is not in contact with both the upper bearing body 81 and the lower bearing body 82. Then, even when an axial load acts on the rotary shaft 52 to which the disk 71 is fixed, the contact between the rotating disk 71 and the upper bearing body 81 and the lower bearing body 82 is inhibited by the upper and lower pressures that act on the lower surface 71b of the disk 71. That is, when an automatic adjustment mechanism moves the disk 71 upward, a load from the upper pockets 81a increases to push down the disk 71. In contrast, when the disk 71 moves downward, a load from the lower pockets 82a increases to push up the disk 71.

Thereafter, when the pump body 32 is activated and the rotary shaft 52 reaches the predetermined rotation speed, the impellers 53A, 53B, and 53C can pressurize the liquid to a predetermined pressure. In the case, the fluid supply mechanism 73 stops the actuation of the high-pressure fluid supply device 91, and supplies high-pressure liquid pressurized by the impeller 53C from the supply passage 74 to the bearing body 72. Thus, the disk 71 continues to be held at the neutral position between the upper bearing body 81 and the lower bearing body 82, where the disk 71 is not in contact with both the upper bearing body 81 and the lower bearing body 82.

### <Actuation of Pump>

As illustrated in FIG. 1, before the drive unit 31 (drive motor 33) is driven, high-pressure liquid is supplied to the non-contact axial bearing 56 by the high-pressure fluid supply device 91 to float the rotary shaft 52 via the disk 71. Then, when the drive unit 31 (drive motor 33) is driven, the rotary shaft 52 is driven and rotated. Rotation of the impellers 53A, 53B, and 53C and the inducer 64 fixed to the rotary shaft 52 actuates the pump body 32. In the case, in the rotary shaft 52, the radial bearings 54 and 55 receive a load in a direction perpendicular to the rotary shaft 52 (radial direction of rotary shaft 52). Furthermore, since the high-pressure liquid is supplied to the non-contact axial bearing 56, the non-contact axial bearing 56 receives an axial load in the rotary shaft 52.

When the pump body 32 is actuated, the inducer 64 suctions the liquid in the liquid reservoir 43 to the suction portion 61, and the impeller 53A pressurizes the liquid in one stage. The liquid pressurized in one stage is supplied to the impeller 53B through the passage 65 to be pressurized in two stages. The liquid pressurized in two stages is supplied to the impeller 53C through the passage 66 to be pressurized in three stages.

A part of the liquid pressurized in three stages is supplied from the supply passage 74 to the bearing body 72 to actuate the non-contact axial bearing 56. Furthermore, a part of the liquid pressurized in two stages rises along the rotary shaft 52 to cool the drive motor 33. Then, most of the liquid pressurized in three stages is supplied to the ejection portion 62 through the passage 67 to be ejected from the ejection pipe 63.

### [Functions and Effects of Embodiment]

A pump according to a first aspect includes: the casing 51 having a hollow shape; the rotary shaft 52 disposed along a vertical direction inside the casing 51; the impellers 53A, 53B, and 53C provided on the rotary shaft 52; the plurality of radial bearings 54 and 55 that rotatably support the rotary shaft 52 with respect to the casing 51 and that receive a load in a direction perpendicular to the rotary shaft 52; and the non-contact axial bearing 56 that rotatably supports the rotary shaft 52 with respect to the casing 51 and that receives an axial load of the rotary shaft 52.

According to the pump of a first aspect, the radial bearings 54 and 55 rotatably support the rotary shaft 52, and receive a load in a direction perpendicular to the rotary shaft 52, and the non-contact axial bearing 56 rotatably supports the rotary shaft 52, and receives an axial load of the rotary shaft 52. The service life can be extended by reducing wear of the radial bearings 54 and 55.

A pump according to a second aspect is the pump according to the first aspect. Moreover, the non-contact axial bearing is a static pressure bearing. This can avoid wear of the non-contact axial bearing 56 and reduce wear of the radial bearings 54 and 55 to extend the service life.

A pump according to a third aspect is the pump according to the first aspect. Moreover, the non-contact axial bearing is a magnetic bearing. This can avoid wear of the non-contact axial bearing 56 and reduce wear of the radial bearings 54 and 55 to extend the service life.

A pump according to a fourth aspect is the pump according to any one of the first to third aspects. Moreover, the radial bearings are rolling bearings. This can simplify the structure.

A pump according to a fifth aspect is the pump according to any one of the first to fourth aspects. Moreover, the non-contact axial bearing 56 is disposed above the plurality of radial bearings 54 and 55 in the vertical direction. This can improve maintainability of the non-contact axial bearing 56.

A pump according to a sixth aspect is the pump according to any one of the first to fifth aspects. Moreover, the non-contact axial bearing 56 includes: the disk 71 fixed to the rotary shaft 52; and the fluid supply mechanism 73 that supplies fluid to the upper surface 71a and the lower surface 71b of the disk 71. This can simplify the structure of the non-contact axial bearing 56 to simplify the structure.

A pump according to a seventh aspect is the pump according to the sixth aspect. Moreover, the fluid supply mechanism 73 supplies fluid pressurized by the impellers 53A, 53B, and 53C to the upper surface 71a and the lower surface 71b of the disk 71. This can eliminate the need for supplying fluid from the outside, and can minimize loss of the pressurized fluid by using the minimum fluid and actuating the non-contact axial bearing 56.

A pump according to an eighth aspect is the pump according to the sixth or seventh aspect. Moreover, the fluid supply mechanism 73 supplies fluid supplied from the outside at the start of rotation of the rotary shaft 52 to the upper surface 71a and the lower surface 71b of the disk 71. This can avoid wear of the non-contact axial bearing 56 and reduce wear of the radial bearings 54 and 55 to extend the service life by actuating the non-contact axial bearing 56 from the time of activation of the pump body 32.

### Reference Signs List

- 30: PUMP
- 31: DRIVE UNIT
- 32: PUMP BODY
- 33: DRIVE MOTOR
- 41: TANK
- 42: UPPER FLANGE
- 43: LIQUID RESERVOIR
- 44: SUPPLY PIPE
- 45: GAS DISCHARGE PIPE
- 51: CASING
- 52: ROTARY SHAFT
- 53A, 53B, 53C: IMPELLER
- 54, 55: RADIAL BEARING
- 56: NON-CONTACT AXIAL BEARING
- 61: SUCTION PORTION
- 62: EJECTION PORTION
- 63: EJECTION PIPE
- 64: INDUCER
- 65, 66, 67: PASSAGE
- 71: DISK
- 72: BEARING BODY
- 73: FLUID SUPPLY MECHANISM
- 74: SUPPLY PASSAGE
- 76: STATOR
- 77: ROTOR
- 81: UPPER BEARING BODY
- 82: LOWER BEARING BODY
- 91: HIGH-PRESSURE FLUID SUPPLY DEVICE
- 92: SUPPLY PASSAGE

## Claims

1. A pump comprising:
a casing having a hollow shape;
a rotary shaft disposed along a vertical direction inside the casing;
an impeller provided on the rotary shaft;
a plurality of radial bearings that rotatably support the rotary shaft with respect to the casing and that receive a load in a direction perpendicular to the rotary shaft; and
a non-contact axial bearing that rotatably supports the rotary shaft with respect to the casing and that receives an axial load of the rotary shaft.

2. The pump according to claim 1, wherein the non-contact axial bearing is a static pressure bearing.

3. The pump according to claim 1, wherein the non-contact axial bearing is a magnetic bearing.

4. The pump according to any one of claims 1 to 3, wherein the radial bearings are rolling bearings.

5. The pump according to claim 1, wherein the non-contact axial bearing is disposed above the plurality of radial bearings in the vertical direction.

6. The pump according to claim 1, wherein the non-contact axial bearing includes a disk fixed to the rotary shaft and a fluid supply mechanism that supplies fluid to an upper surface and a lower surface of the disk.

7. The pump according to claim 6, wherein the fluid supply mechanism supplies fluid pressurized by the impeller to the upper surface and the lower surface of the disk.

8. The pump according to claim 6 or 7, wherein the fluid supply mechanism supplies fluid supplied from outside at start of rotation of the rotary shaft to the upper surface and the lower surface of the disk.
